# EUROPÄISCHE PATENTSCHRIFT

(11) **EP 0 760 485 B1**
(45) Veröffentlichungstag und Bekanntmachung des Hinweises auf die Patenterteilung: **24.10.2001**
(21) Anmeldenummer: 96106079.5
(22) Anmeldetag: 18.04.1996
(51) Int. Cl.: G01S 13/93, G01C 21/20, B60K 31/00

(54) **Verfahren zur Hinderniserkennung für eine Geschwindigkeits- und/oder Abstandsregelung eines Kraftfahrzeuges**
Method of obstacle detection for a speed or distance control in a vehicle
Méthode de détection d'obstacles pour une commande de vitesse ou de distance d'un véhicule

(30) Priorität: 30.08.1995 DE 19531885
(43) Veröffentlichungstag der Anmeldung: 05.03.1997
(73) Patentinhaber: Volkswagen Aktiengesellschaft, 38436 Wolfsburg (DE)
(72) Erfinder: Hamberger, Werner, Dipl.-Ing., 76327 Pfinztal-Söllingen (DE)

(56) Entgegenhaltungen:
- EP-A- 0 464 821
- GB-A- 2 265 042
- US-A- 4 361 202
- IEICE TRANSACTIONS ON ELECTRONICS, Bd. E76-C, Nr. 12, 1.Dezember 1993, Seiten 1717-1726, XP000426733 SASAYAMA T: "TECHNOLOGICAL TRENDS AND KEY TECHNOLOGIES IN INTELLIGENT VEHICLES"
- PATENT ABSTRACTS OF JAPAN vol. 017, no. 095 (P-1493), 25.Februar 1993 & JP-A-04 290200 (MATSUSHITA ELECTRIC IND CO LTD), 14.Oktober 1992,

## Beschreibung

Die Erfindung betrifft ein Verfahren zur Hinderniserkennung für eine Abstands- und/oder Geschwindigkeitsregelung eines Kraftfahrzeuges, bei dem mit Hilfe einer Detektionseinrichtung der Abstand und/oder die Geschwindigkeit eines vor dem Kraftfahrzeug befindlichen Hindernisses erkannt wird.

Geschwindigkeitsregelanlagen für Kraftfahrzeuge sind seit Jahren allgemein bekannt. Sie dienen zur Entlastung des Fahrers, indem sie eine vom Fahrer eingestellte Geschwindigkeit ohne weitere Betätigung des Gaspedals konstant beibehalten. Die Schwierigkeit dabei ist, daß bei jeder Störung, sei es durch andere Verkehrsteilnehmer oder durch die Streckenführung, der Fahrer in die Geschwindigkeitsregelung wieder aktiv eingreifen muß. Da diese notwendige Aktion als unangenehm empfunden wird - die Geschwindigkeitsregelanlage muß danach wieder aktiviert werden -, wird sie vom Fahrer, in der Hoffnung sie vielleicht vermeiden zu können, öfter auch zu stark hinausgezögert, was zu kritischen Situationen führen kann. Um das oben genannte Problem teilweise zu beseitigen und um eine weitere Entlastung des Fahrers zu erreichen, wurde die Geschwindigkeitsregelanlage durch eine automatische Abstandsregelung ergänzt.

Eine Abstandsregelungsanlage, wie sie beispielsweise aus der deutschen Offenlegungsschrift DE 33 25 713 bekannt ist, ermöglicht es, geregelt hinter einem vorausfahrenden Fahrzeug herzufahren und das Fahrzeug in einem bestimmten Bereich automatisch zu verzögern bzw. zu beschleunigen.

Bei den meisten der bekannten Abstandsregelungsanlagen gibt es Probleme bei der Zielobjekterkennung auf gekrümmten oder mehrspurigen Strecken. Dabei kann es vorkommen, daß in einer Kurve Objekte am Straßenrand, wie Bäume oder Leitplanken, oder Fahrzeuge auf parallel verlaufenden Fahrspuren fälschlicherweise als Hindernis oder vorausfahrendes Fahrzeug erkannt und deshalb Fehlreaktionen des Systems ausgelöst werden. Um das Auftreten solcher Fehler zu vermeiden, wird in der deutschen Offenlegungsschrift DE 42 08 012 A1 ein Verfahren zur Einstellung der Fahrgeschwindigkeit eines Kraftfahrzeuges offenbart, zu dessen Durchführung das Kraftfahrzeug mit einem Fahrgeschwindigkeitsregler und einer diesem übergeordneten Abstandsregelung mit einer Kurvenerkennungseinrichtung ausgerüstet ist. Dabei wird die Geschwindigkeit des Kraftfahrzeuges durch den Fahrgeschwindigkeitsregler auf einer vom Fahrzeugführer vorwählbaren Geschwindigkeit gehalten, wenn sich kein Fahrzeug innerhalb eines vorgegebenen Abstands vor dem Fahrzeug bewegt, andernfalls wird die Geschwindigkeit durch die Abstandsregelung entsprechend dem Abstand des Fahrzeugs zu einem vor diesem befindlichen Frontfahrzeug gesteuert. Bei laufender Abstandsregelung und Verschwinden des Frontfahrzeugs und gleichzeitigem Erkennen einer Kurve wird ein Signal erzeugt, welches verwendet wird, um eine für den Fahrzeugführer jedenfalls spürbare Verzögerung des Fahrzeugs zu bewirken. Der Fahrgeschwindigkeitsregler wird bis zum Ende der Kurve ausgeblendet, um den Fahrzeugführer auf eine eventuelle Gefahrensituation aufmerksam zu machen, jedenfalls nach dem Ende der Kurve wird ein durch die Fahrgeschwindigkeitsregler bzw. die Abstandsregelung vorgegebene Geschwindigkeit wieder aufgenommen. Bei diesem Verfahren stützt sich die Kurvenerkennung auf die Auswertung unterschiedlichster Sensoren, wie dem Lenkwinkel, die Verrechnung unterschiedlicher Raddrehzahlen an einer gelenkten Achse oder auf ein Radarsystem. Die Verwendung von Kurvenerkennungssystemen, die auf der Auswertung des Lenkwinkels oder der Raddrehzahlen basieren, ist problematisch, da dabei nur eine momentane und keine vorausschauende Auswertung möglich ist, andererseits kann die Beeinflussung dieser Größen durch den Fahrzeugführer zu Problemen führen. Auch die Verwendung eines Radarverfahrens zur Kurven- bzw. Hinderniserkennung alleine ist heute noch problematisch.

Ein ähnliches Verfahren beschreibt die europäische Patentanmeldung EP 464 821 A1, wobei das Fahrzeug mit einem Sensor zur Hinderniserkennung ausgestattet ist. Zur Erkennung und Eleminierung von Hindernissen, die sich außerhalb des Fahrweges des Fahrzeuges befinden, wird anhand von momentanen Daten, die sich aus dem Fahrverhalten des Fahrzeuges und einer ermittelten Straßengeometrie ergeben, der voraussichtliche Fahrweg des Fahrzeuges ermittelt und die Sensordaten des Abstandssensors bewertet.

Des Weiteren ist aus der US 4,361,202 ein System zum automatischen Führen eines führerlosen Fahrzeuges bekannt, bei dem in die Fahrbahnoberfläche ein metallischer Leitdraht eingelassen ist, an dem das fahrerlose Fahrzeug geführt wird. Außerdem sind an ausgewählten Punkten entlang des Leitdrahtes Transponder in die Fahrbahnoberfläche eingebettet. Das Fahrzeug korrespondiert beim Überfahren mit diesen Transpondern und erhält Informationen über die Geschwindigkeit des vorausfahrenden Fahrzeugs, eine Routenauswahl usw. zwecks Fahrspurwechsel oder Abbiegemöglichkeiten.

Zusätzlich ist das Fahrzeug mit einem Radarsensor ausgerüstet, der eine Objekterkennung rund um das Fahrzeug zur Kollisionsvermeidung durchführt. In Abhängigkeit der Sensorsignale wird eine Geschwindigkeits- bzw. Abstandsregelung durchgeführt.

Der Erfindung liegt die Aufgabe zugrunde, ein Verfahren zur Hinderniserkennung für eine Abstands- und/oder Geschwindigkeitsregelung zu schaffen, mit dessen Hilfe auch bei einer Kurvenfahrt nur solche momentan vor dem Kraftfahrzeug befindlichen Objekte als Hindernis erkannt werden, welche sich tatsächlich auf der Fahrbahn befinden und dementsprechend die Geschwindigkeits- oder Abstandsregelung während einer Kurvenfahrt nicht außer Kraft gesetzt werden muß.

Die Aufgabe wird durch die Merkmale des Patentanspruchs gelöst, vorteilhafte Aus- und Weiterbildungen sind in den Unteransprüchen dargestellt.

Erfindungsgemäß wird auf Basis von Straßenkarteninformationen einer im Kraftfahrzeug vorhandenen Navigationseinrichtung eine Bewertung des von der Detektionseinrichtung erfaßten Hindernisses oder eine Einstellung der Detektionseinrichtung (beispielsweise Verschwenken der Einrichtung oder Veränderung ihrer Fokussierung) vorgenommen. Die bei dem erfindungsgemäßen Verfahren verwendeten Straßenkarteninformationen können einmal fahrbahnspezifischen Kenngrößen wie die Krümmungsverläufe, die Kurvenradien oder die Fahrbahnsteigung der befahrenen Strecke, oder auch Informationen über den Straßen- bzw. Fahrbahntyp wie beispielsweise die Anzahl und Richtung der Spuren sein.

Nachfolgend wird die Erfindung anhand mehrerer Ausführungsbeispiele näher beschrieben. Die zugehörigen Zeichnungen zeigen:
- Figur 1: eine Darstellung eines kurvenförmigen Abschnittes einer Straße,
- Figur 2: ein Blockschaltbild einer Einrichtung zur Durchführung des Verfahrens und
- Figur 3: ein weiteres Blockschaltbild zur Durchführung des Verfahrens.

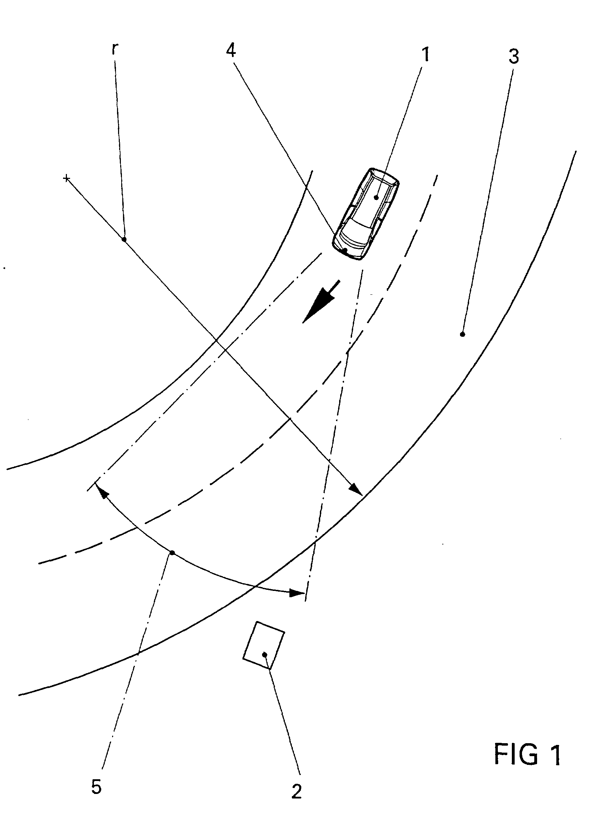

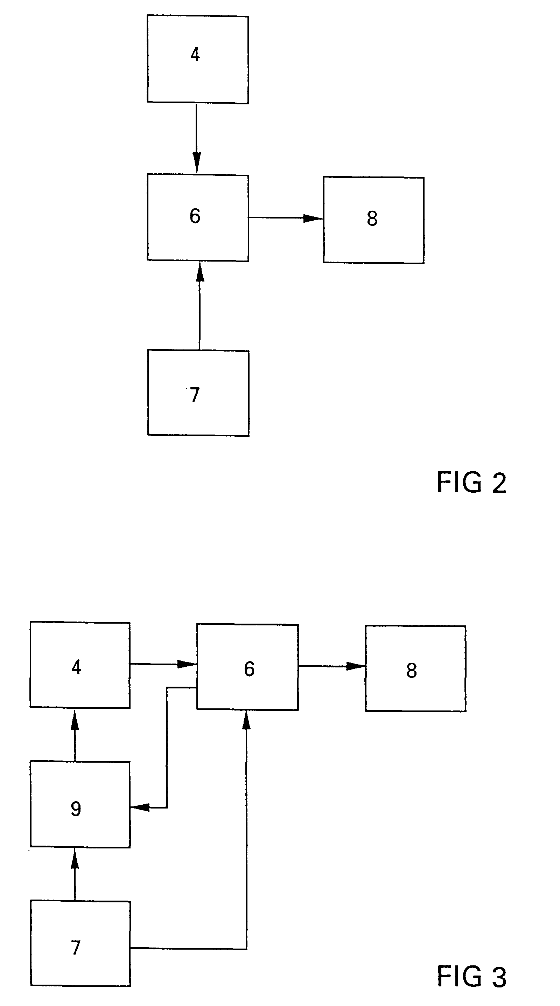

In Figur 1 durchfährt ein mit einer Abstandsregelung ausgestattetes Fahrzeug 1 einen kurvenförmigen Abschnitt einer Straße 3 mit jeweils einer Spur in jeder Fahrtrichtung. Die auf Radar- oder Lasertechnik basierende Detektionseinrichtung 4 des Kraftfahrzeuges überstreicht dabei den mit einer Strich-Punkt-Linie gekennzeichneten Suchraum 5 der Straße und eines Straßenrandbereiches, in dem sich das Objekt 2 (ein Baum oder ein abgestelltes Fahrzeug) befindet, registriert dieses Objekt als Hindernis und gibt diese Information an die in Figur 2 dargestellte Verarbeitungseinrichtung 6. Gleichzeitig erhält die Verarbeitungseinrichtung von der Navigationseinrichtung 7 die Mitteilung, daß das Kraftfahrzeug eine Kurve mit dem Kurvenradius r durchfährt und kann somit ermitteln, daß es sich bei dem Objekt 2 nicht um ein auf der Fahrbahn befindlichen Hindernis handelt und demzufolge nicht von der Geschwindigkeit- und Abstandsregelungseinrichtung 8 berücksichtigt werden muß. Es wird kein oder ein entsprechendes Informationssignal an die Geschwindigkeits- und Abstandsregelungseinrichtung 8 gesendet.

Eine andere Auswertemöglichkeit ist in Figur 3 gezeigt. Auch hier erfaßt die Detektionseinrichtung 4 das Objekt 2 und gibt eine entsprechende Information an die Verarbeitungseinrichtung 6. Dieser liegt außer dem die fahrzeugspezifische Information der Navigationseinrichtung 7 vor, daß sich das Fahrzeug 1 in einer Kurve der Straße 3 befindet. Aus beiden Informationen ermittelt die Verarbeitungseinrichtung 6, daß das erfaßte Objekt 2 kein für die Geschwindigkeits- und Abstandsregelungseinrichtung 8 relevantes Hindernis ist. Gleichzeitig berechnet sie ein Stellsignal für die Stelleinrichtung 9 der Detektionseinrichtung 4 zum Einstellen des Suchraums 5 oder der Fokussierung der Detektionseinrichtung 4.

## Patentansprüche

1. Verfahren zur Hinderniserkennung für eine Abstands- und/oder Geschwindigkeitsregelung eines Kraftfahrzeuges, bei dem mit Hilfe einer Detektionseinrichtung der Abstand und/oder die Geschwindigkeit eines vor dem Kraftfahrzeug befindlichen Hindernisses erkannt wird, **dadurch gekennzeichnet, daß** auf der Basis von Straßenkarteninformationen einer im Kraftfahrzeug vorhandenen Navigationseinrichtung (7) eine Bewertung des von der Detektionseinrichtung (4) erfaßten Hindernisses (2) und/oder eine Einstellung der Detektionseinrichtung (4) auf einen bestimmten Suchraum (5) vorgenommen wird.

2. Verfahren nach Anspruch 1, **dadurch gekennzeichnet, daß** die Straßenkarten-Informationen fahrbahnspezifische Kenngrößen (KV, KR) sind.

3. Verfahren nach Anspruch 2, **dadurch gekennzeichnet, daß** die fahrbahnspezifischen Kenngrößen die Krümmungsverläufe, die Fahrbahnsteigungen oder die Kurvenradien (r) der befahrenen Strecke sind.

4. Verfahren nach einem der Ansprüche 1 bis 3, **dadurch gekennzeichnet, daß** die Straßenkarteninformationen Informationen über den Straßentyp der befahrenen Strecke sind.

## Claims

1. Method of detecting an obstacle for a distance and/or speed control in a motor vehicle, wherein with the aid of a detection device the distance and/or the speed of an obstacle located in front of the motor vehicle is detected, **characterised in that** on the basis of street-map information of a navigation device (7) provided in the motor vehicle, the obstacle (2) detected by the detection device (4) is assessed and/or the detection device (4) is set to a predetermined search area (5).

2. Method according to claim 1, **characterised in that** the street-map information is represented by roadway-specific characteristic variables (KV, KR).

3. Method according to claim 2, **characterised in that** the roadway-specific characteristic variables are the curvature progressions, the roadway gradients or the curve radii (r) of the route travelled.

4. Method according to any one of the claims 1 to 3, **characterised in that** the street-map information is information regarding the type of road on the route travelled.

## Revendications

1. Procédé de détection d'obstacles pour une régulation de distance et/ou de vitesse d'un véhicule automobile, dans lequel la distance et/ou la vitesse d'un obstacle se trouvant devant le véhicule automobile sont détectées à l'aide d'un dispositif de détection, **caractérisé en ce qu'**une évaluation de l'obstacle (2) détecté par le dispositif de détection (4), et/ou un réglage du dispositif de détection (4) sur une zone de recherche (5) définie, sont effectués sur la base d'informations de cartes routières d'un dispositif de navigation (7) existant dans le véhicule.

2. Procédé selon la revendication 1, **caractérisé en ce que** les informations de cartes routières sont des grandeurs caractéristiques (KV, KR) spécifiques à la voie.

3. Procédé selon la revendication 2, **caractérisé en ce que** les grandeurs caractéristiques spécifiques à la voie sont les tracés en forme de virage, les pentes de la voie ou les rayons de courbure (r) du parcours emprunté.

4. Procédé selon l'une des revendications 1 à 3, **caractérisé en ce que** les informations de cartes routières sont des informations relatives au type de la route du parcours emprunté.
